# EUROPÄISCHE PATENTANMELDUNG

(11) **EP 4 174 390 A1**
(43) Veröffentlichungstag der Anmeldung: **03.05.2023**
(21) Anmeldenummer: 22197383.7
(22) Anmeldetag: 23.09.2022
(51) Int. Cl.: F24F 5/00, A01G 9/24, F24F 110/10, F24F 3/14, F25B 21/02, F25D 1/00

(54) **KLIMATISIERUNGSEINRICHTUNG UND VERFAHREN ZUM KLIMATISIEREN**

(30) Priorität: 25.10.2021 DE 102021127686
(71) Anmelder: Miele & Cie. KG, 33332 Gütersloh (DE)
(72) Erfinder: MARTIN, James, 81249 München (DE)

(57) **Zusammenfassung**

Die Erfindung betrifft eine Klimatisierungseinrichtung (110) für eine Vorrichtung (100), wobei die Klimatisierungseinrichtung (110) einen Einlass (400) aufweist, der mit einem Ausgang (140) der Vorrichtung (100) verbindbar ist, um eine feuchte Luft (300) einzulassen und/oder aufzunehmen. Die Klimatisierungseinrichtung (110) weist zumindest ein Temperierelement (305) zum Durchleiten der feuchten Luft (300) auf, um die feuchte Luft (300) zu entfeuchten und eine gekühlte Luft (850) zu erhalten. Ferner weist die Klimatisierungseinrichtung (110) zumindest ein Peltier-Element (600) auf, das ausgebildet ist, um das Temperierelement (305) zu temperieren. Die Klimatisierungseinrichtung (110) weist außerdem zumindest einen Temperatursensor (805) auf, der ausgebildet ist, um ein eine Temperatur der gekühlten Luft (850) repräsentierendes Temperatursignal (810) zum Steuern des Peltier-Elements (600) bereitzustellen.

## Beschreibung

Die Erfindung betrifft eine Klimatisierungseinrichtung, eine Vorrichtung, insbesondere zur Aufzucht von Pflanzen, und ein Verfahren zum Klimatisieren einer Vorrichtung, insbesondere zur Aufzucht von Pflanzen.

Aktuell werden für die Messung von Parametern (Temperatur und Feuchtigkeit) zur Klimasteuerung, beispielsweise in vertikalen Indoor-Farming-Produkten, Standard-Temperatur/Feuchtigkeits-Sensoren verwendet, wo eine Steuerung von Feuchtigkeitsmessung und -steuerung erforderlich ist, und Standard-Thermostate, bei denen nur eine Temperaturmessung und -steuerung erforderlich ist.

Der Erfindung stellt sich die Aufgabe, eine verbesserte Klimatisierungseinrichtung, eine verbesserte Vorrichtung, insbesondere zur Aufzucht von Pflanzen, und ein verbessertes Verfahren zum Klimatisieren, insbesondere einer Vorrichtung zur Aufzucht von Pflanzen, zu schaffen.

Erfindungsgemäß wird diese Aufgabe durch eine Klimatisierungseinrichtung, eine Vorrichtung, insbesondere zur Aufzucht von Pflanzen, und ein Verfahren zum Klimatisieren einer Vorrichtung, insbesondere zur Aufzucht von Pflanzen, mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass mittels zumindest eines Temperatursensors ein Peltier-Element optimal gesteuert werden kann, sodass eine feuchte Luft entfeuchtet wird.

Eine entsprechende Klimatisierungseinrichtung, beispielsweise für eine Vorrichtung zur Aufzucht von Pflanzen, weist einen Einlass auf, der mit einem Ausgang, beispielsweise einer Pflanzkammer, der Vorrichtung verbindbar ist, um eine feuchte Luft, beispielsweise aus der Pflanzkammer, einzulassen und/oder aufzunehmen, wobei die Klimatisierungseinrichtung die folgenden Merkmale aufweist:
zumindest ein Temperierelement zum Durchleiten der feuchten Luft, um die feuchte Luft durch Abkühlen auf eine Temperatur unterhalb des Taupunkts zu entfeuchten und eine gekühlte Luft mit einem Ziel-Feuchtegehalt zu erhalten;
zumindest ein Peltier-Element, das ausgebildet ist, um das Temperierelement zu temperieren; und
zumindest einen Temperatursensor, der ausgebildet ist, um ein eine Temperatur der gekühlten Luft repräsentierendes Temperatursignal zum Steuern des Peltier-Elements bereitzustellen.

Die Erfindung ist grundsätzlich für alle Haushaltsgeräte geeignet, um deren Innenräume gezielt zu entfeuchten und somit ein Klima mit einer gewünschten Feuchtigkeit und Temperatur zu erreichen. Im Folgenden wird aber der Einfachheit halber als ein konkretes Beispiel auf eine Vorrichtung zur Aufzucht von Pflanzen abgestellt.

Unter einer Vorrichtung zur Aufzucht von Pflanzen kann ein Gewächsschrank verstanden werden, in dem beispielsweise Salate aufgezogen werden können. Die Vorrichtung besteht aus einer Klimatisierungseinrichtung und einer Pflanzkammer. Bei der Klimatisierungseinrichtung kann es sich um ein Klimasystem handeln, das feuchte Luft aus der Pflanzkammer trocknet und die trockene Luft in die Pflanzkammer leitet. Bei der Pflanzkammer kann es sich um eine Kammer handeln, in deren Innenraum Pflanzen wachsen. Die Pflanzkammer kann einen Eingang zum Einleiten einer trockenen Luft und einen Ausgang zum Ausleiten einer feuchten Luft aus der Pflanzkammer aufweisen sowie eine Beleuchtungsvorrichtung, die ausgebildet ist, um die Luft in der Pflanzkammer zu temperieren. Unter einem Temperierelement kann ein Kühlkörper verstanden werden. Bei einem Peltier-Element kann es sich um einen elektrothermischen Wandler handeln, der zur Kühlung und/oder zur Erwärmung verwendet werden kann. Bei einem Temperatursensor kann es sich um einen Sensor handeln, der die Temperatur der Luft misst.

Der hier vorgestellte Ansatz ermöglicht eine zuverlässige Messung und Steuerung von Parametern (Temperatur und Feuchtigkeit) selbst unter anspruchsvollen nicht-empfohlenen Betriebsbedingungen. Die Klimatisierungseinrichtung für vertikale Indoor-Farming-Systeme wird dadurch robuster und stabiler. Dadurch, dass kein kostenintensiver Temperatur- oder Feuchtigkeitssensor verwendet werden braucht, werden die Gesamtkosten des Produkts gesenkt. Dies trifft insbesondere zu, wenn mehrere Temperatursensoren in einem einzelnen Produkt verwendet werden und eine sehr große Zahl an Produkten hergestellt wird. Das gesamte System der Sensor-Positionierung, Installation und Einhausung wird mit dem hier vorgestellten Ansatz ähnlich. Die Genauigkeit und Präzision von Parameter-Messungen verbessert sich durch den hier vorgestellten Ansatz, was wiederum zu einer besseren Klimatisierungseinrichtung führt. Verschiedene Fehlermöglichkeiten der Temperatursensoren wie Wasser auf dem Sensor, Kondensation am Sensor, elektrische Fehler etc. haben keinen Einfluss auf die Implementierung der Sensoren. Die Datenübertragung, -übersetzung und Speicherung mit Temperatursensoren ist unkompliziert und kostengering, auch wenn mehrere Sensoren in einem Produkt verwendet werden.

Die Klimatisierungseinrichtung kann gemäß einer Ausführungsform ein externes Temperierelement aufweisen, wobei das Peltier-Element zwischen dem Temperierelement und dem externen Temperierelement angeordnet ist. Unter einem externen Temperierelement kann ein Temperierelement verstanden werden, welches eine Verbindung oder an einer Außenseite oder in einem thermischen Pfad parallel zu dem Pfad zwischen der Temperierelement und dem Peltier-Element aufweist. Dies bietet den Vorteil, dass die beim Entfeuchten der feuchten Luft entstehende Wärmeenergie von dem Peltier-Element in das externe Temperierelement geleitet werden kann und im externen Temperierelement zwischengespeichert werden kann.

Die Klimatisierungseinrichtung kann gemäß einer Ausführungsform ein zweites Temperierelement aufweisen, zum Erhitzen der gekühlten Luft auf eine Ziel-Temperatur, um eine trockene Luft zu erhalten. Dies bietet den Vorteil, dass die gekühlte Luft getrocknet werden kann, um sie anschließend der Pflanzkammer zuführen zu können.

Die Klimatisierungseinrichtung kann gemäß einer Ausführungsform ein weiteres Peltier-Element aufweisen, wobei das weitere Peltier-Element zwischen dem zweiten Temperierelement und dem externen Temperierelement angeordnet ist. Dies bietet den Vorteil, dass die gekühlte Luft beim Durchströmen durch das zweite Temperierelement getrocknet werden kann, da das weitere Peltier-Element das zweite Temperierelement steuert.

Die Klimatisierungseinrichtung kann gemäß einer Ausführungsform einen weiteren Temperatursensor aufweisen, der ausgebildet ist, um ein eine Temperatur der trockenen Luft repräsentierendes weiteres Temperatursignal zum Steuern des weiteren Peltier-Elements bereitzustellen. Dies bietet den Vorteil, dass das weitere Peltier-Element gesteuert werden kann, sodass es die gekühlte Luft, die durch das zweite Temperierelement strömt, auf die optimale Temperatur trocknen kann.

Eine Vorrichtung zur Aufzucht von Pflanzen kann gemäß einer Ausführungsform die folgenden Merkmale aufweisen:
eine Pflanzkammer, wobei die Pflanzkammer einen Innenraum zum Aufnehmen von Pflanzen aufweist, und einen Eingang zum Einleiten einer trockenen Luft und einen Ausgang zum Ausleiten einer feuchten Luft aus der Pflanzkammer aufweist, mit einer Beleuchtungsvorrichtung, die ausgebildet ist, um die Luft in der Pflanzkammer zu temperieren; und
eine Klimatisierungseinrichtung.

Ein entsprechendes Verfahren zum Klimatisieren der Vorrichtung zur Aufzucht von Pflanzen kann gemäß einer Ausführungsform die folgenden Schritte umfassen:
Durchleiten der feuchten Luft durch zumindest ein Temperierelement, um die feuchte Luft zu entfeuchten und um die gekühlte Luft zu erhalten;
Temperieren des Temperierelementes unter Verwendung des zumindest einen Peltier-Elements; und
Bereitstellen des Temperatursignals, das eine Temperatur der gekühlten Luft repräsentiert, zum Steuern des Peltier-Elements.

Auch wenn der beschriebene Ansatz anhand eines Haushaltgeräts beschrieben wird, kann die hier beschriebene Klimatisierungseinrichtung, die hier beschriebene Vorrichtung und das hier beschriebene Verfahren zum Klimatisieren einer Vorrichtung zur Aufzucht von Pflanzen entsprechend im Zusammenhang mit einem gewerblichen oder professionellen Gerät, beispielsweise einem Gastronomiegerät eingesetzt werden.

Der hier vorgestellte Ansatz schafft ferner eine Steuervorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Steuervorrichtung kann die der Erfindung zugrundeliegende Aufgabe schnell und effizient gelöst werden.

Die Steuervorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuervorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Steuervorrichtung kann ausgebildet sein, um die Ausgangssignale unter Verwendung einer in Hardware oder Software umgesetzten Verarbeitungsvorschrift zu bestimmen. Beispielsweise kann die Steuervorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuervorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels einer Vorrichtung zur Aufzucht von Pflanzen;
- Figur 2: eine rückseitige Darstellung eines Ausführungsbeispiels einer Vorrichtung zur Aufzucht von Pflanzen;
- Figur 3: eine schematische Teilansicht eines Ausführungsbeispiels einer Vorrichtung zur Aufzucht von Pflanzen;
- Figur 4: eine schematische, rückseitige Darstellung eines Ausführungsbeispiels einer Klimatisierungseinrichtung;
- Figur 5: eine schematische Darstellung eines Ausführungsbeispiels der Temperierelemente;
- Figur 6: eine Explosionsdarstellung eines Ausführungsbeispiels der Temperierelemente;
- Figur 7: eine schematische Darstellung eines Ausführungsbeispiels der Klimatisierungseinrichtung;
- Figur 8: eine schematische Darstellung eines Ausführungsbeispiels einer Vorrichtung zur Aufzucht von Pflanzen;
- Figur 9: ein Ablaufdiagramm eines Ausführungsbeispiels eines Verfahrens zum Klimatisieren einer Vorrichtung zur Aufzucht von Pflanzen; und
- Figur 10: den Verlauf einer Ausführungsform in einem psychrometrischen Diagramm.

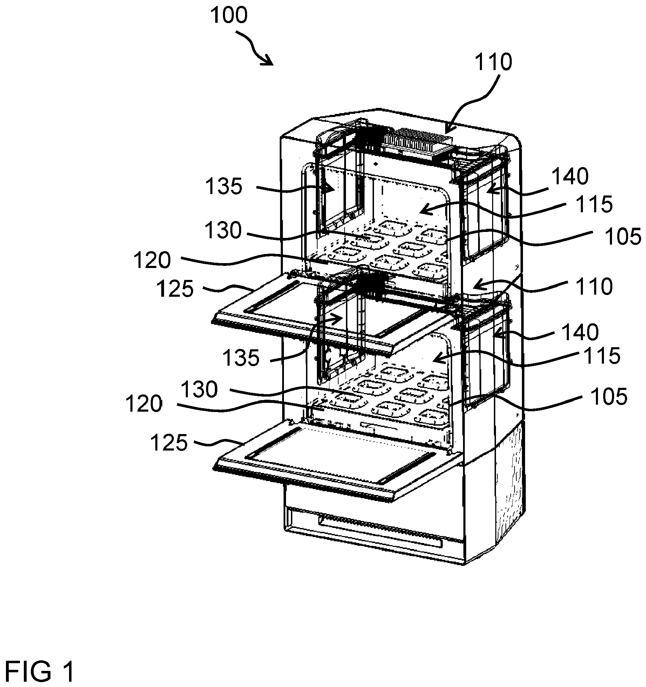

Figur 1 zeigt eine schematische Darstellung eines Ausführungsbeispiels einer Vorrichtung 100 zur Aufzucht von Pflanzen. Die Vorrichtung 100 besteht aus einer Pflanzkammer 105 und einer Klimatisierungseinrichtung 110. In Figur 1 weist die Vorrichtung 100 beispielhaft zwei Pflanzkammern 105 und zwei Klimatisierungseinrichtungen 110 auf.

Die Pflanzkammer 105 weist einen Innenraum 115 auf, in dem sich eine Aufzuchteinheit 120 befindet. Die Aufzuchteinheit 120 ist ausgebildet, um aus dem Innenraum 115 der Pflanzkammer 105 herausgezogen und hineingeschoben zu werden. Dazu befindet sich eine Klappe 125 vor dem Innenraum 115 der Pflanzkammer 105, die der Benutzer öffnet, um an die Aufzuchteinheit 120 zu gelangen. Die Aufzuchteinheit 120 weist beispielhaft mehrere Vertiefungen 130 auf, in die beispielhaft ein Substrat mit Saatgut eingebracht wird.

Gemäß einem Ausführungsbeispiel weist die Pflanzkammer 105 eine Beleuchtungsvorrichtung auf, die in Figur 1 nicht dargestellt ist. Die Beleuchtungsvorrichtung ist beispielhaft als LED-Beleuchtung ausgeformt und ausgebildet, um Luft in der Pflanzkammer 105 zu temperieren.

Die Pflanzkammer 105 weist einen Eingang 135 und einen Ausgang 140 auf. Der Eingang 135 und der Ausgang 140 befinden sich beispielhaft gegenüberliegend voneinander, sodass Luft durch die Pflanzkammer 105 strömen kann. Der Eingang 135 ist ausgebildet, um trockene Luft in die Pflanzkammer 105 einzuleiten und der Ausgang 140 ist ausgebildet, um feuchte Luft aus der Pflanzkammer 105 zu leiten.

Die ausgeleitete feuchte Luft aus der Pflanzkammer 105 strömt beispielhaft in die Klimatisierungseinrichtung 110, die oberhalb der Pflanzkammer 105 angeordnet ist. Die Klimatisierungseinrichtung 110 ist ausgebildet, um die feuchte Luft aus der Pflanzkammer 105 zu temperieren, also zu erwärmen. Dazu weist die Klimatisierungseinrichtung 110 einen Einlass auf, der mit dem Ausgang 140 der Pflanzkammer 105 verbindbar ist, um die feuchte Luft aus der Pflanzkammer 105 einzulassen.

Gemäß einem Ausführungsbeispiel weist die Klimatisierungseinrichtung 110 zumindest ein Temperierelement zum Durchleiten der feuchten Luft auf, um die feuchte Luft zu entfeuchten und eine gekühlte Luft zu erhalten.

Gemäß einem weiteren Ausführungsbeispiel weist die Klimatisierungseinrichtung 110 zumindest ein Peltier-Element auf, das ausgebildet ist, um das Temperierelement zu temperieren.

Gemäß einem weiteren Ausführungsbeispiel weist die Klimatisierungseinrichtung 110 zumindest einen Temperatursensor auf, der ausgebildet ist, um das Peltier-Element zu steuern.

Ferner weist die Klimatisierungseinrichtung 110 einen Auslass auf, der mit dem Eingang 135 der Pflanzkammer 105 verbindbar ist, um die trockene Luft aus der Klimatisierungseinrichtung 110 zu dem Eingang 135 der Pflanzkammer 105 zu leiten.

Gemäß einem Ausführungsbeispiel befindet sich Saatgut, beispielsweise Saatgut von Küchenkräutern, in den Vertiefungen 130 der Aufzuchteinheit 120. Damit die Küchenkräuter optimal wachsen, ist eine Steuerung der Temperatur und der Luftfeuchtigkeit in der Pflanzkammer 105 wichtig, da bei der Photosynthese die Luftfeuchtigkeit steigt, für ein optimales Pflanzenwachstum jedoch eine trockene Luft vorteilhaft ist. Die Klimatisierungseinrichtung 110 wandelt die feuchte Luft aus der Pflanzkammer 105 in trockene Luft um und führt die trockene Luft wieder der Pflanzkammer 105 zu.

Damit Pflanzen eine hohe und effiziente Photosyntheserate aufrechterhalten können, benötigen sie eine optimale Temperatur und Feuchtigkeit an ihren Blattflächen. Diese optimale Bedingung von Temperatur und Feuchtigkeit kann durch einen einzelnen Parameter repräsentiert kann, der als VPD (vapor-pressure deficit bzw. Sättigungsdefizit) bekannt ist. VPD ist ein kritischer Faktor für Pflanzenwachstum und hat einen starken Einfluss auf die Wachstumsraten von Pflanzen.

Wenn Pflanzen Photosynthese vollenden, steigt Feuchtigkeit von der Blattoberfläche auf. Dies erhöht die Feuchtigkeit in der Umgebung der Pflanze. Gleichzeitig entfernt dieses Verdunsten Wärme aus der Luft. Die LED-Beleuchtung fügt dem System Wärme hinzu und als Ergebnis ändert sich die Lufttemperatur (Erhöhung oder Verringerung).

Damit die Pflanzen so schnell und effektiv wie möglich wachsen, stellt die Klimatisierungseinrichtung 110, die auch als Klimasteuerungssystem bezeichnet werden kann, sicher, dass die durch die Pflanzen strömende Luft auf der gewünschten Temperatur und Feuchtigkeit gehalten wird. Dies erfordert allgemein das Entfernen von Feuchtigkeit aus der Luft und das Erhöhen/Verringern der Lufttemperatur.

Eine zuverlässige und effiziente Klimatisierungseinrichtung 110 erfordert eine präzise Messung dieser Parameter, die eingegeben werden und zur Steuerung verwendet werden, um die gewünschte Temperatur und Feuchtigkeit aufrechtzuerhalten. Es wird eine kosteneffiziente Sensorlösung mit hoher Genauigkeit und langlebiger Präzision geschaffen, um eine zuverlässige Messung und Steuerung in einem vertikalen Indoor-Farming-System zu gewährleisten.

In der Klimatisierungseinrichtung 110 wird überschüssige Feuchtigkeit entfernt. Die Temperatur wird durch Entfernen/Hinzufügen von Wärme aufrechterhalten. In der Pflanzkammer 105 wird die optimale Temperatur und Feuchtigkeit (VPD) aufrechterhalten. Die Feuchtigkeit erhöht sich ständig aufgrund der Pflanzen. Die Temperatur verringert sich geringfügig aufgrund der Zunahme der Feuchtigkeit. Die Temperatur erhöht sich aufgrund der Wärmeeingabe von den LEDs.

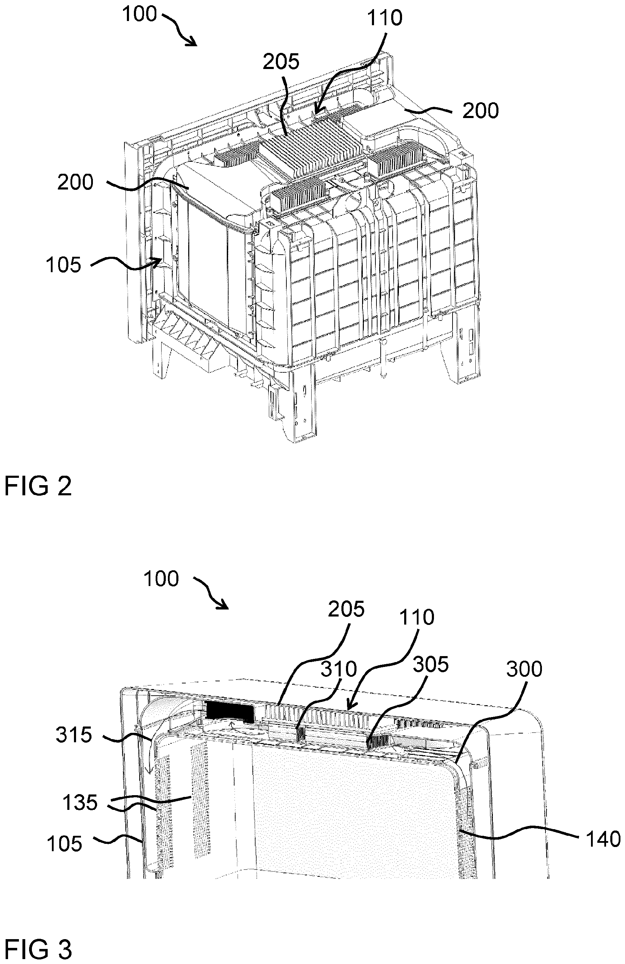

Figur 2 zeigt eine rückseitige Darstellung eines Ausführungsbeispiels einer Vorrichtung 100 zur Aufzucht von Pflanzen, bei der es sich um die in Figur 1 beschriebene Vorrichtung 100 handeln kann. Die Vorrichtung 100 weist beispielhaft eine Pflanzkammer 105 sowie eine Klimatisierungseinrichtung 110 auf, wie sie in Figur 1 beschrieben sind. Die Klimatisierungseinrichtung 110 ist in Figur 2 teilweise von Abdeckplatten 200 verdeckt. Lediglich ein externes Temperierelement 205 ist sichtbar. Unterhalb der Abdeckplatten 200 befinden sich beispielhaft ein erstes Temperierelement und ein zweites Temperierelement. Das erste Temperierelement ist zum Durchleiten der feuchten Luft ausgebildet, um die feuchte Luft zu entfeuchten und um gekühlte Luft zu erhalten. Das erste Temperierelement befindet sich beispielhaft unter dem externen Temperierelement 205. Zwischen dem ersten Temperierelement und dem externen Temperierelement 205 ist beispielhaft ein Peltier-Element angeordnet.

Das zweite Temperierelement ist zum Durchleiten der gekühlten Luft ausgebildet, um die trockene Luft zu erhalten. Das zweite Temperierelement befindet sich beispielhaft unter dem externen Temperierelement 205. Zwischen dem zweiten Temperierelement und dem externen Temperierelement 205 ist beispielhaft ein weiteres Peltier-Element angeordnet.

Figur 3 zeigt eine schematische Teilansicht eines Ausführungsbeispiels einer Vorrichtung 100 zur Aufzucht von Pflanzen, wobei es sich um die in Figur 1 und Figur 2 beschriebene Vorrichtung 100 handeln kann.

Die Klimatisierungseinrichtung 110 ist beispielhaft oberhalb der Pflanzkammer 105 angeordnet, sodass feuchte Luft 300 aus der Pflanzkammer 105 durch den Ausgang 140 der Pflanzkammer 105 in die Klimatisierungseinrichtung 110 strömen kann. Die Klimatisierungseinrichtung 110 weist einen Einlass auf, der mit dem Ausgang 140 der Pflanzenkammer 105 verbunden ist. Die feuchte Luft 300 strömt durch das erste Temperierelement 305. Dabei wird das erste Temperierelement 305 von dem Peltier-Element gekühlt, welches in Figur 3 nicht sichtbar ist, um die feuchte Luft 300 zu entfeuchten. Das Peltier-Element ist zwischen dem ersten Temperierelement 305 und dem externen Temperierelement 205 angeordnet. Die bei der Entfeuchtung der feuchten Luft 300 erzeugte Wärmeenergie gelangt in das externe Temperierelement 205. Nachdem die feuchte Luft 300 in dem ersten Temperierelement 305 entfeuchtet wird, strömt die nun gekühlte Luft durch das zweite Temperierelement 310. Dabei wird das zweite Temperierelement 310 von dem weiteren Peltier-Element erwärmt, welches in Figur 3 nicht sichtbar ist, um die Luft zu erwärmen. Das weitere Peltier-Element ist zwischen dem zweiten Temperierelement 310 und dem externen Temperierelement 205 angeordnet. Um die Luft zu erwärmen wird Wärmeenergie aus dem externen Temperierelement 205 verwendet. Die Luft, die aus dem zweiten Temperierelement 310 herausströmt ist trockene Luft 315. Die trockene Luft 315 gelangt durch den Auslass der Klimatisierungseinrichtung 110 in den Eingang 135 der Pflanzkammer 105. Der Auslass der Klimatisierungseinrichtung 110 ist mit dem Eingang 135 der Pflanzkammer 105 verbindbar, um die trockene Luft 315 aus der Klimatisierungseinrichtung 110 zu dem Eingang 135 der Pflanzkammer 105 zu leiten.

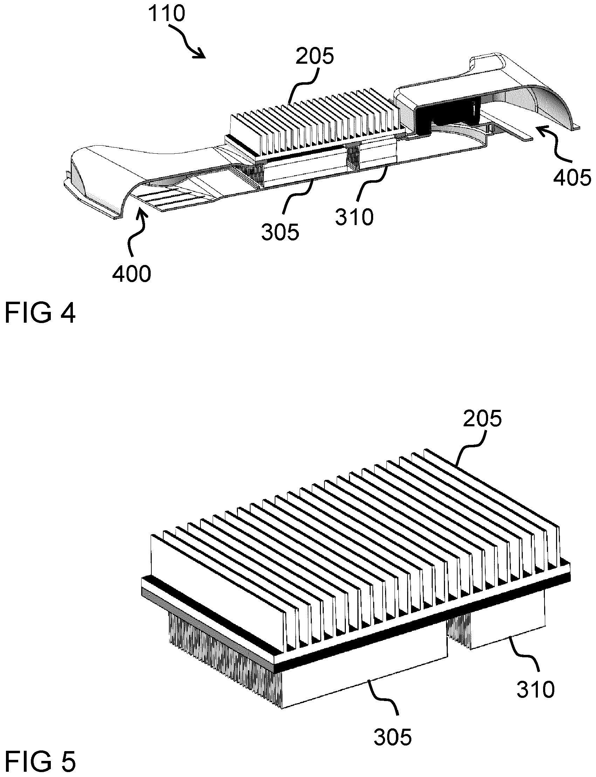

Figur 4 zeigt eine schematische, rückseitige Darstellung eines Ausführungsbeispiels einer Klimatisierungseinrichtung 110, wobei es sich um die in den vorherigen Figuren beschriebene Klimatisierungseinrichtung 110 handeln kann. Oberhalb der Klimatisierungseinrichtung 110 ist das externe Temperierelement 205 angeordnet. Unterhalb des externen Temperierelementes 205 befindet sich das erste Temperierelement 305 und das zweite Temperierelement 310. Die feuchte Luft aus der Pflanzkammer strömt durch den Einlass 400 der Klimatisierungseinrichtung 110 durch das erste Temperierelement 305 und anschließend als gekühlte Luft durch das zweite Temperierelement 310. Die feuchte Luft wird in der Klimatisierungseinrichtung 110 zunächst entfeuchtet, getrocknet und anschließend erwärmt. Als trockene Luft strömt die Luft durch den Auslass 405 aus der Klimatisierungseinrichtung 110 hinaus und wieder in die Pflanzkammer hinein.

Figur 5 zeigt eine schematische Darstellung eines Ausführungsbeispiels der Temperierelemente 205, 305, 310, wobei es sich um die in den vorherigen Figuren beschriebenen Temperierelemente 205, 305, 310 handeln kann.

Das externe Temperierelement 205 befindet sich oberhalb des ersten 305 und zweiten Temperierelementes 310. Das erste Temperierelement 305 ist beispielhaft doppelt so groß ausgeformt wie das zweite Temperierelement 310. Zwischen dem ersten Temperierelement 305 und dem externen Temperierelement 205 befindet sich ein Peltier-Modul. Ein weiteres Peltier-Modul befindet sich zwischen dem zweiten Temperierelement 310 und dem externen Temperierelement 205.

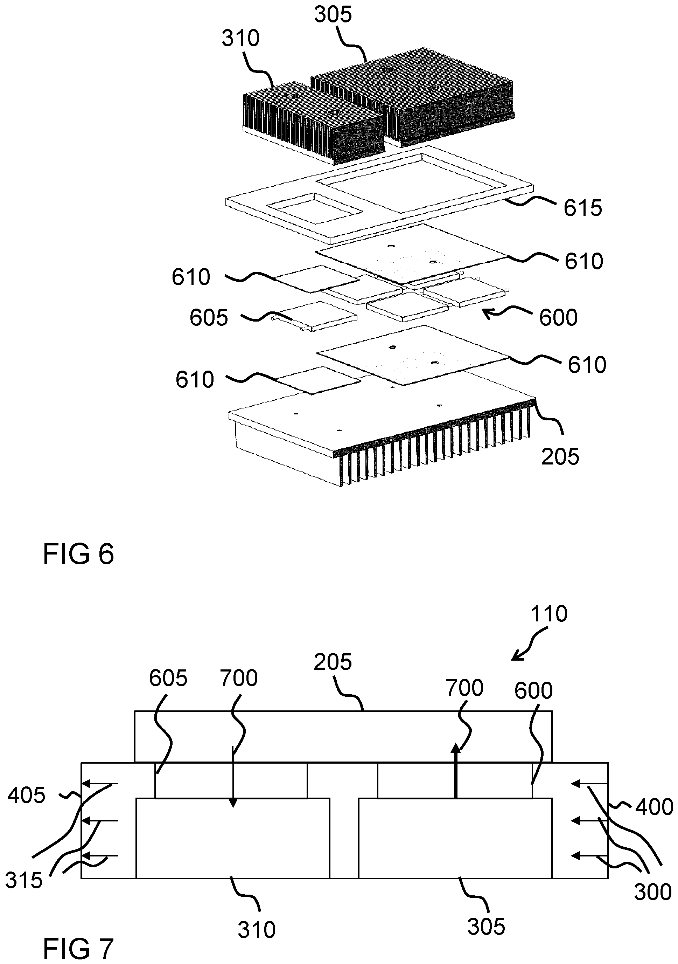

Figur 6 zeigt eine explosionsartige Darstellung eines Ausführungsbeispiels der Temperierelemente 205, 305, 310, wobei es sich um eine explosionsartige Darstellung der in Figur 5 gezeigten Temperierelemente 205, 305, 310 handelt.

Zwischen dem ersten Temperierelement 305 und dem externen Temperierelement 205 befinden sich beispielhaft vier Peltier-Elemente 600. Die vier Peltier-Elemente 600 sind ausgebildet, um das externe Temperierelement 205 zu kühlen, um die feuchte Luft zu entfeuchten. Zwischen dem zweiten Temperierelement 310 und dem externen Temperierelement 205 befindet sich beispielhaft ein weiteres Peltier-Element 605. Das weitere Peltier-Element 605 ist ausgebildet, um das zweite Temperierelement 310 zu heizen, um die zu entfeuchtete Luft zu erwärmen. Die vier Peltier-Elemente 600 und das weitere Peltier-Element 605 sind jeweils von Metallbrücken 610 umgeben. Die Metallbrücken 610 sind ausgebildet, um einen thermischen Kontakt herzustellen.

Unterhalb des ersten Temperierelementes 305 und des zweiten Temperierelementes 310 befindet sich ein Aufnahmeelement 615, das ausgebildet ist, um die Peltier-Elemente 600, 605 und die Metallbrücken 610 aufzunehmen.

Figur 7 zeigt eine schematische Darstellung eines Ausführungsbeispiels einer Klimatisierungseinrichtung 110. Dabei kann es sich um die in den vorherigen Figuren beschriebene Klimatisierungseinrichtung 110 handeln.

Die Klimatisierungseinrichtung 110 weist einen Einlass 400 zum Einlassen von feuchter Luft 300 aus der Pflanzkammer auf. Die feuchte Luft 300 strömt in das erste Temperierelement 305 und wird dort entfeuchtet, um trockene Luft zu erhalten. Dabei wird das erste Temperierelement 305 von dem Peltier-Element 600 gekühlt, um die feuchte Luft 300 zu entfeuchten. Das Peltier-Element 600 ist zwischen dem ersten Temperierelement 305 und dem externen Temperierelement 205 angeordnet. Die bei der Entfeuchtung der feuchten Luft 300 erzeugte Wärmeenergie 700 gelangt in das externe Temperierelement 205. Nachdem die feuchte Luft 300 in dem ersten Temperierelement 305 entfeuchtet wird, strömt sie als gekühlte Luft durch das zweite Temperierelement 310. Dabei wird das zweite Temperierelement 310 von dem weiteren Peltier-Element 605 erwärmt, um die Luft zu erwärmen. Das weitere Peltier-Element 605 ist zwischen dem zweiten Temperierelement 310 und dem externen Temperierelement 205 angeordnet. Um die Luft zu erwärmen wird die Wärmeenergie 700 aus dem externen Temperierelement 205 verwendet. Die Luft, die aus dem zweiten Temperierelement 310 herausströmt ist trockene Luft 315. Die trockene Luft 315 gelangt durch den Auslass 405 der Klimatisierungseinrichtung 110 in den Eingang der Pflanzkammer.

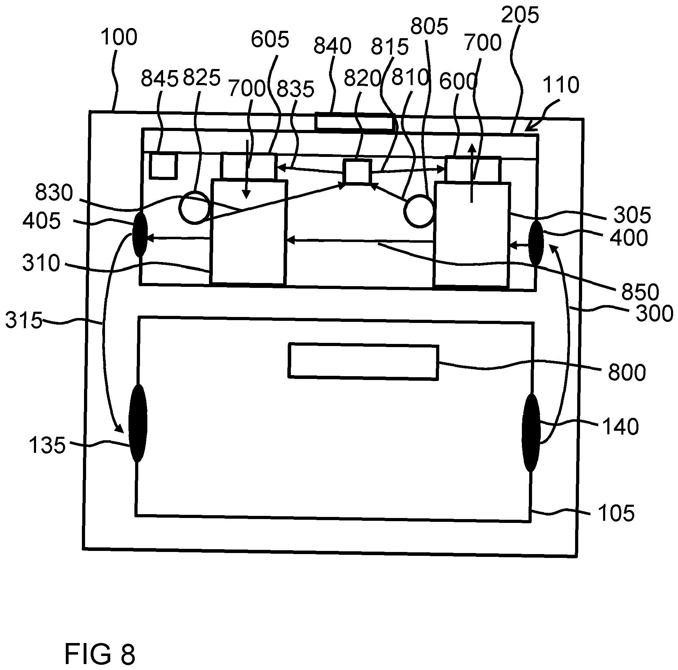

Figur 8 zeigt eine schematische Darstellung eines Ausführungsbeispiels einer Vorrichtung 100 zur Aufzucht von Pflanzen, wobei es sich um die in Figur 1 beschriebene Vorrichtung 100 handeln kann.

Gemäß einem Ausführungsbeispiel besteht die Vorrichtung 100 aus einer Klimatisierungseinrichtung 110 und einer Pflanzkammer 105. Die Pflanzkammer weist beispielhaft eine Beleuchtungsvorrichtung 800 auf. Die Beleuchtungsvorrichtung 800 ist beispielhaft als LED-Beleuchtung ausgeformt und ausgebildet, um die Lufttemperatur in der Pflanzkammer 105 zu erhöhen.

Die Klimatisierungseinrichtung 110 weist gemäß einem Ausführungsbeispiel einen Temperatursensor 805 auf, der ausgebildet ist, um ein Temperatursignal 810 bereitzustellen. Das Temperatursignal 810 repräsentiert eine Temperatur der gekühlten Luft, um das Peltier-Element 600 zu steuern. Die Steuerung des Peltier-Elements 600 erfolgt durch ein Steuersignal 815, das von einer Steuereinrichtung 820 bereitgestellt wird. Das Steuersignal 815 wird unter Verwendung des Temperatursignals 810 bereitgestellt. Die Steuereinrichtung 820 ist ausgebildet, um das Steuersignal 820 zum Steuern des Peltier-Elements 600 bereitzustellen.

Die Klimatisierungseinrichtung 110 weist gemäß einem Ausführungsbeispiel einen weiteren Temperatursensor 825 auf, der ausgebildet ist, um ein weiteres Temperatursignal 830 bereitzustellen. Das weitere Temperatursignal 830 repräsentiert eine Temperatur der trockenen Luft 315, um das weitere Peltier-Element 605 zu steuern. Die Steuerung des weiteren Peltier-Elements 605 erfolgt durch ein weiteres Steuersignal 835, das von der Steuereinrichtung 820 bereitgestellt wird. Das weitere Steuersignal 835 wird unter Verwendung des weiteren Temperatursignals 830 bereitgestellt. Die Steuereinrichtung 820 ist ausgebildet, um das weitere Steuersignal 835 zum Steuern des Peltier-Elements 605 bereitzustellen.

Gemäß einem Ausführungsbeispiel weist die Klimatisierungseinrichtung 110 einen Lüfter 840 auf, der ausgebildet ist, um Umgebungsluft durch das externe Temperierelement 205 zu leiten.

Gemäß einem weiteren Ausführungsbeispiel weist die Klimatisierungseinrichtung 110 einen Ventilator 845 auf, der ausgebildet ist, um einen Luftstrom zwischen dem Einlass 400 und dem Auslass 405 der Klimatisierungseinrichtung 110 zu bewirken.

Um eine optimale Temperatur und Feuchtigkeit (VPD) aufrechtzuerhalten, besitzt das Klimatisierungssystem 110, das auch als Luftbehandlungs- oder Klimasteuerungskammer bezeichnet werden kann, ein erstes Temperierelement 305 das auch als Entfeuchtungssystem bezeichnet werden kann, das die Luftfeuchtigkeit steuert, die in die Pflanzkammer 105 hineingeht. Das Temperierelement 305 in dem Klimatisierungssystem 110 verringert auch die Lufttemperatur, was wiederum das Erfordernis an ein zweites Temperierelement 310, das auch als Wiederaufheizsystem bezeichnet werden kann, mit sich bringt, um die Lufttemperatur nach der Entfeuchtung zu steuern.

Der erste Temperatursensor 805 wird verwendet, um das erste Temperierelement 305 zu steuern und der zweite Temperatursensor 825 wird verwendet, um das zweite Temperierelement 310 zu steuern. Zusammen stellen sie sicher, dass die Temperatur und Feuchtigkeit am Auslass 405 der Klimatisierungseinrichtung 110 optimal ist, bevor die trockene Luft 315 in die Pflanzkammer 105 eintritt.

Die Temperatursensoren 805, 825 sind ausgebildet, um die gewünschte Temperatur und Feuchtigkeit in der Pflanzkammer 105 zu erreichen, ohne die Feuchtigkeit in dem Gesamtsystem zu messen. Die trockene Luft 315 strömt durch den Eingang 135 der Pflanzkammer 105 in die Pflanzkammer 105 hinein. Zuvor wurde die Luft vollständig durch das erste Temperierelement 305 und das zweite Temperierelement 310 behandelt, und befindet sich bei der erforderlichen Temperatur und Feuchtigkeit anschließend am Eingang 135 der Pflanzkammer 105. Die feuchte Luft 300 befindet sich am Ausgang 140 der Pflanzkammer 105. Die Luftfeuchtigkeit erhöht sich aufgrund der Feuchtigkeit, die von den Pflanzen abgegeben wird und die Temperatur erhöht sich aufgrund der Wärmeabgabe von der Beleuchtungsvorrichtung 800. Die feuchte Luft 300 wird von dem ersten Temperierelement 305 in eine gekühlte Luft 850 umgewandelt. Der erste Temperatursensor 805 steuert dazu das erste Temperierelement 305, um die gekühlte Luft 850 zu erhalten.

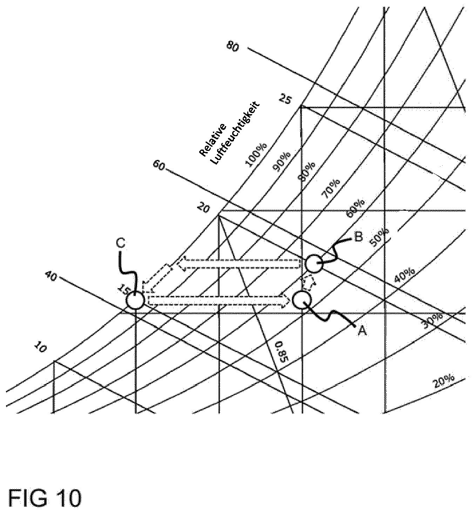

Dabei wird ausgenutzt, dass die maximale Menge an Feuchtigkeit in Luft (gleicher Luftdruck vorausgesetzt) temperaturabhängig ist. Je geringer die Temperatur ist, desto weniger Feuchtigkeit kann Luft enthalten. Dabei kann die relative Luftfeuchtigkeit 100% (=Taupunkt) nicht überschreiten, mit weiter sinkender Temperatur nimmt die relative Luftfeuchtigkeit nicht mehr ab, allerdings der absolute Feuchtegehalt. Unter Ausnutzung dieser Tatsache ist es erfindungsgemäß möglich, einen gewünschten Ziel-Feuchtegehalt zu erreichen, indem Luft soweit unter den Taupunkt abgekühlt wird, dass der gewünschte Ziel-Feuchtegehalt erreicht wird. Da diesem Zustand über das h-x-Diagramm feuchter Luft (siehe auch Figur 10) eine Temperatur zugeordnet ist, kann ohne Einsatz einer Feuchtemessung nur mit Temperaturmessung dieser Ziel-Zustand erreicht werden.

Der Luftzustand hier ist optimal in Bezug auf die erforderliche (absolute) Feuchtigkeit, ist aber zu kalt. Danach wird die gekühlte Luft 850 wieder in dem zweiten Temperierelement 310 auf die erforderliche Temperatur aufgeheizt, während die (absolute) Feuchtigkeit konstant bleibt. Dadurch, unter Verwendung von Thermodynamik und dem Abzielen darauf, dass der erste Temperatursensor 805 immer die Temperatur der gekühlten Luft 850 erreicht, indem das erste Temperierelement 305 gesteuert wird, wird die überschüssige Feuchtigkeit entfernt, ohne die Feuchtigkeit irgendwo in der Vorrichtung 100 zu messen und einen teuren, unzuverlässigen Feuchtigkeitssensor zu verwenden.

Indem nur günstige Temperatursensoren 805, 825 anstelle von Temperatur/Feuchtigkeitssensoren verwendet werden, besteht ein bedeutender Kostenvorteil beim gesamten Produkt. Die Probleme, die mit einer Sättigung und Rekalibrierung unter extremen Luftfeuchtigkeitsbedingungen zusammenhängen, werden durch den hier vorgestellten Ansatz vermieden. Die Unzuverlässigkeit und die Risiken, die mit der Langzeitnutzung eines Temperatur-/Feuchtigkeitssensors mit einem schmalen Bereich empfohlener Betriebsbedingungen verbunden sind, werden beseitigt. Der hier vorgestellte Ansatz macht die Klimatisierungseinrichtung 110 für vertikale Indoor-Farming-System robuster und stabiler. Das Kommunikationsprotokoll und die Datenübertragung werden in einem großen Maß vereinfacht, indem beispielhaft nur ein Temperatursensor 805, 825 verwendet wird. Das macht das System schneller, günstiger und verlässlicher. Die Klimatisierungseinrichtung 110 eines vertikalen Indoor-Farming-System-Produkts wird sicherer und weniger anfällig. Der Einfluss von externen und internen Fehlerquellen wird verringert.

Die Temperatur wird so geregelt, dass im Ergebnis die richtige Luftfeuchte und Temperatur erreicht wird. Dabei wird die Tatsache ausgenutzt, dass die (relative) Luftfeuchte 100% nicht überschreitet, wobei der Überschuss der (absoluten) Luftfeuchte aus der abgekühlten feuchten Luft ausfällt. Es wird dabei auf die Temperatur hinabgeregelt, die beim Wiederaufheizen zu der gewünschten Kombination von Luftfeuchte < 100% und Temperatur führt.

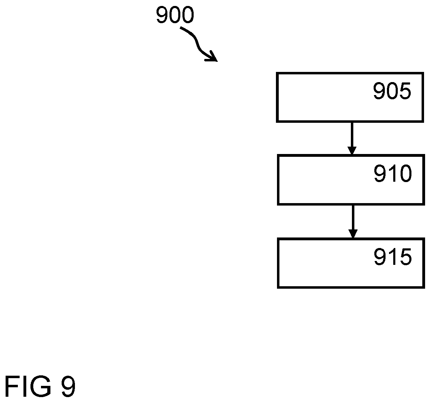

Figur 9 zeigt ein Ablaufdiagramm eines Ausführungsbeispiels eines Verfahrens 900 zum Klimatisieren einer Vorrichtung zur Aufzucht von Pflanzen. Das Verfahren 900 umfasst einen Schritt 905 des Durchleitens der feuchten Luft durch zumindest ein Temperierelement, um die feuchte Luft zu entfeuchten und um die gekühlte Luft zu erhalten. In einem Schritt 910 des Temperierens wird des Temperierelement unter Verwendung des zumindest einen Peltier-Elements temperiert. In einem Schritt 915 des Bereitstellens wird das Temperatursignal bereitgestellt, das eine Temperatur der gekühlten Luft repräsentiert, zum Steuern des Peltier-Elements.

Figur 10 zeigt den Ablauf einer Ausführungsform innerhalb einer Pflanzkammer in einem psychrometrischen Diagramm. Beginnend am Punkt A wird die Luft einerseits durch die LED-Beleuchtung aufgeheizt und andererseits durch die Pflanzen angefeuchtet. Die Temperatur und die Feuchtigkeit steigen bis zum Punkt B. Ab Punkt B wird die Luft abgekühlt. Dabei sinkt einerseits die Temperatur und nimmt andererseits die (relative) Feuchtigkeit zu. Dies geht bis zum Erreichen einer relativen Luftfeuchtigkeit von 100% bzw. dem Taupunkt. Da die relative Luftfeuchtigkeit nun nicht weiter steigen kann, die Lufttemperatur aber weiter sinkt, nimmt der absolute Feuchtegehalt durch Kondensation der überschüssigen Feuchtigkeit ab. Dies wird bis zum Punkt C weitergeführt, an dem der gewünschte absolute Feuchtegehalt erreicht ist, die Temperatur aber zu niedrig ist. Durch erneutes Aufheizen wird die Temperatur bei gleichbleibender absoluter Feuchtigkeit soweit angehoben, bis am Punkt A die gewünschte Kombination von Temperatur und Feuchtigkeit erreicht ist. Dieser Prozess wird im Kreislauf durchgeführt, um in der Pflanzkammer die gewünschte Feuchtigkeit aufrechtzuerhalten. Er kommt ohne Messung einer Luftfeuchtigkeit aus und bietet daher die vorstehend beschriebenen Vorteile.

## Patentansprüche

1. Klimatisierungseinrichtung (110) für eine Vorrichtung (100), wobei die Klimatisierungseinrichtung (110) einen Einlass (400) aufweist, der mit einem Ausgang (140) der Vorrichtung (100) verbindbar ist, um eine feuchte Luft (300) einzulassen und/oder aufzunehmen, wobei die Klimatisierungseinrichtung (110) die folgenden Merkmale aufweist:
zumindest ein Temperierelement (305) zum Durchleiten der feuchten Luft (300), um die feuchte Luft (300) durch Abkühlen auf eine Temperatur unterhalb des Taupunkts zu entfeuchten und eine gekühlte Luft (850) mit einem Ziel-Feuchtegehalt zu erhalten;
zumindest ein Peltier-Element (600), das ausgebildet ist, um das Temperierelement (305) zu temperieren; und
zumindest einen Temperatursensor (805), der ausgebildet ist, um ein eine Temperatur der gekühlten Luft (850) repräsentierendes Temperatursignal (810) zum Steuern des Peltier-Elements (600) bereitzustellen.

2. Klimatisierungseinrichtung (110) gemäß Anspruch 1, mit einem externen Temperierelement (205), wobei das Peltier-Element (600) zwischen dem Temperierelement (305) und dem externen Temperierelement (205) angeordnet ist.

3. Klimatisierungseinrichtung (110) gemäß einem der vorangegangenen Ansprüche, mit einem zweiten Temperierelement (310), zum Erhitzen der gekühlten Luft (850) auf eine Ziel-Temperatur, um eine trockene Luft (315) zu erhalten.

4. Klimatisierungseinrichtung (110) gemäß Anspruch 2 und 3, mit einem weiteren Peltier-Element (605), wobei das weitere Peltier-Element (605) zwischen dem zweiten Temperierelement (310) und dem externen Temperierelement (205) angeordnet ist.

5. Klimatisierungseinrichtung (110) gemäß Anspruch 3, mit einem weiteren Temperatursensor (825), der ausgebildet ist, um ein eine Temperatur der trockenen Luft (315) repräsentierendes weiteres Temperatursignal (830) zum Steuern des weiteren Peltier-Elements (605) bereitzustellen.

6. Vorrichtung (100) zur Aufzucht von Pflanzen, wobei die Vorrichtung (100) die folgenden Merkmale aufweist:
eine Pflanzkammer (105), wobei die Pflanzkammer (105) einen Innenraum (115) zum Aufnehmen von Pflanzen aufweist, und einen Eingang (135) zum Einleiten einer trockenen Luft (315) und einen Ausgang (140) zum Ausleiten einer feuchten Luft (300) aus der Pflanzkammer (105) aufweist, mit einer Beleuchtungsvorrichtung (800), die ausgebildet ist, um die Luft in der Pflanzkammer (105) zu temperieren; und
eine Klimatisierungseinrichtung (110) gemäß einem der Ansprüche 1 bis 5.

7. Verfahren (900) zum Klimatisieren einer Vorrichtung (100), insbesondere einer Vorrichtung zur Aufzucht von Pflanzen gemäß Anspruch 6, wobei das Verfahren (900) die folgenden Schritte umfasst:
Durchleiten (905) einer feuchten Luft (300) durch zumindest ein Temperierelement (305, 310), um die feuchte Luft (300) durch Abkühlen auf eine Temperatur unterhalb des Taupunkts zu entfeuchten und um eine gekühlte Luft (850) mit einem Ziel-Feuchtegehalt zu erhalten;
Temperieren (910) des Temperierelementes (305) unter Verwendung des zumindest einen Peltier-Elements (600); und
Bereitstellen (910) des Temperatursignals (810), das eine Temperatur der gekühlten Luft (850) repräsentiert, zum Steuern des Peltier-Elements (600).

8. Verfahren (900) nach Anspruch, umfassend den Schritt:
Erhitzen der gekühlten Luft (850) auf eine Ziel-Temperatur, um eine trockene Luft (315) zu erhalten.

9. Steuervorrichtung (820) zum Klimatisieren einer Vorrichtung (100), insbesondere gemäß Anspruch 6, die ausgebildet ist, um die Schritte des Verfahrens (900) gemäß Anspruch 7 oder 8 in entsprechenden Einheiten auszuführen und/oder anzusteuern.

10. Computer-Programmprodukt mit Programmcode zur Durchführung des Verfahrens (900) nach einem der vorangegangenen Ansprüche, wenn das Computer-Programmprodukt auf einer Steuervorrichtung (820) ausgeführt wird.
